# EUROPEAN PATENT SPECIFICATION

(11) **EP 2 988 458 B1**
(45) Date of publication and mention of the grant of the patent: **07.06.2023**
(21) Application number: 15181404.3
(22) Date of filing: 18.08.2015
(51) Int. Cl.: H04L 51/42

(54) **METHOD AND DEVICE FOR SENDING MESSAGE**
VERFAHREN UND VORRICHTUNG ZUM SENDEN VON NACHRICHTEN
PROCÉDÉ ET DISPOSITIF POUR L'ENVOI D'UN MESSAGE

(30) Priority: 19.08.2014 CN 201410410385
(43) Date of publication of application: 24.02.2016
(73) Proprietor: Xiaomi Inc., Beijing 100085 (CN)
(72) Inventor: LIU, Guoming, Beijing 100085 (CN)
(74) Representative: Cabinet Beau de Loménie

(56) References cited:
- WO-A1-99/49679
- US-A1- 2002 081 998
- US-A1- 2013 159 941

## Description

### TECHNICAL FIELD

The invention generally relates to the field of computer technology, and more particularly, to a method and a device for sending a message.

### BACKGROUND

With increasing popularity of messaging applications, communications between people evolves from traditional telephone communication to communications through messages. Users may utilize the messaging applications to communicate about daily affairs. In doing so, users may need to send an instant message at a certain specified date and a specified moment.

To send a message with a delay, a terminal may acquire an edited message, and display a time-option list including a year option item, a month option item, a date option item and a moment option item. Each time option item includes a plurality of options, an upward button for selecting an option above a current option, and a downward button for selecting an option below a current option. Each option selected by a user through pressing the upward button and the downward button is received to obtain sending time of the message. The message and the sending time of the message are stored. When it is monitored that the system time reaches the sending time of the message, the message is sent.

This solution of the prior art is cumbersome, time consuming and inefficient.

Document WO 99/49679 A1 discloses telecommunications systems and methods for allowing a mobile subscriber to define a date and time of delivery for a SMS message sent by the mobile subscriber to another mobile subscriber.

Document US 2013/159941 A1 discloses an apparatus for and method of controlling display of information for two applications or images.

### SUMMARY

In order to overcome the problem in the prior art, a method and a device and a corresponding computer-program product for sending a message are provided by the invention. The present invention is defined in the appended independent claims to which reference should be made. Advantageous features are set out in the appended dependent claims.

The advantageous effects brought by the technical solutions provided by the embodiments of the invention include the following:

An operation signal triggered by a single operation performed by a user on a touch screen is acquired, sending time of a message is determined according to the operation signal, and the message is sent when it is monitored that system time of the terminal reaches the sending time. The sending time of the message may be determined by acquiring an operation signal triggered by a single operation performed by a user on the touch screen, without selecting options in each time option item by pressing an upward button and a downward button for many times to determine the sending time of the message. Thus, the present disclosure may solve the problem that determining the sending time by pressing an upward button and a downward button for many times consumes a large quantity of time, which results in relatively low setting efficiency. Consequently, an effect of improved efficiency in setting a message is achieved.

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a flow chart of a method for sending a message according to an exemplary embodiment;
Fig.2A is a flow chart of a method for sending a message according to another exemplary embodiment;
Fig.2B is a schematic diagram of a message-list page according to an exemplary embodiment;
Fig.2C is a schematic diagram of a first kind of single operation according to an exemplary embodiment;
Fig.2D is a schematic diagram of a second kind of single operation according to an exemplary embodiment;
Fig.2E is a schematic diagram of a third kind of single operation according to an exemplary embodiment;
Fig.2F is a schematic diagram of inquiring whether to edit a message according to an exemplary embodiment;
Fig.3 is a block diagram of a device for sending a message according to an exemplary embodiment;
Fig.4 is a block diagram of a device for sending a message according to another exemplary embodiment; and
Fig.5 is a block diagram of a device for sending a message according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

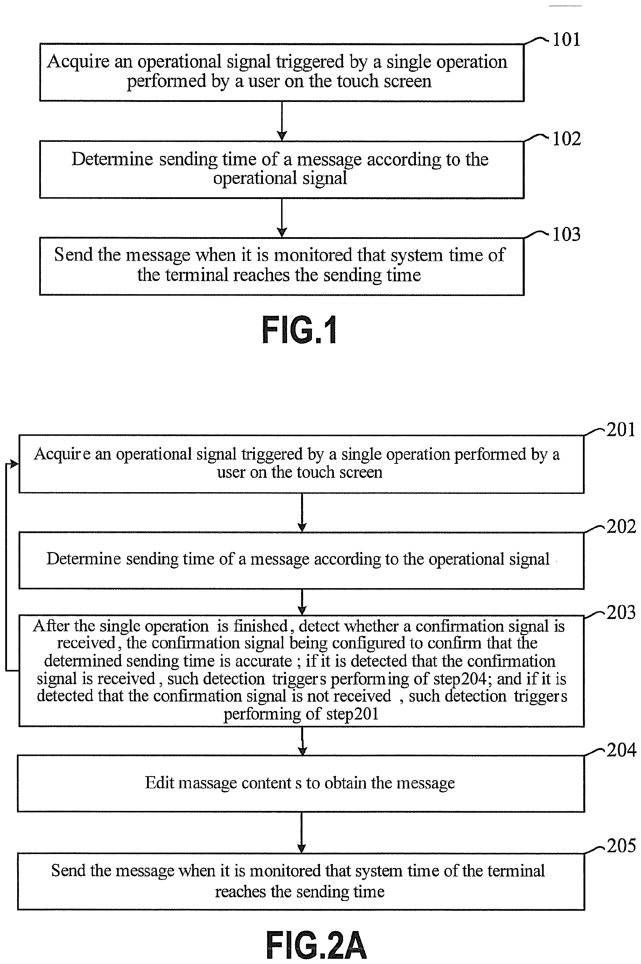

Fig.1 is a flow chart of a method for sending a message according to an exemplary embodiment. The method for sending a message is applied in a terminal containing a touch screen. As shown in Fig.1, the method for sending a message includes the following steps.

In step 101, an operation signal triggered by a single operation performed by a user on the touch screen is acquired.

The single operation refers to an operation performed during a period from a pointer device, for example the user's finger, contacting the touch screen to the pointer device leaving the touch screen.

In step 102, sending time of a message is determined according to the operation signal.

In the invention, the message may be a short message edited through an application program such as a short message application, or may also be an instant message edited through an instant communication tool. The type of the message is not limited in the invention. Contents of the message may include at least one of a text, a picture, an audio and a video.

In step 103, the message is sent when it is monitored that system time of the terminal reaches the sending time.

Since the terminal may send a message with a delay, after the message and the sending time of the message are determined, the terminal may monitor the system time, and when it monitors that the system time of the terminal reaches the sending time of the message, the terminal sends the message.

In the invention, the terminal may determine the sending time of a message according to a single operation, without selecting options with regard to each time option item by pressing an upward button and a downward button for many times to determine the sending time of the message. Thus, time consumed in setting the sending time may be significantly saved, and thereby the efficiency in setting a message is improved.

Accordingly, in the method for sending a message provided by the invention, an operation signal triggered by a single operation performed by a user on the touch screen is acquired, sending time of a message is determined according to the operation signal, and the message is sent when it is monitored that system time of the terminal reaches the sending time. The sending time of the message may be edited by acquiring an operation signal triggered by a single operation performed by a user on the touch screen, without selecting options with regard to each time option item by pressing an upward button and a downward button for many times to edit the sending time of the message. Thus, the method may solve the problem that editing sending time by pressing an upward button and a downward button for many times consumes a large quantity of time, which results in relatively low setting efficiency. Consequently, an effect of improved efficiency in setting a message is achieved.

Fig.2A is a flow chart of a method for sending a message according to another exemplary embodiment. The method for sending a message is applied in a terminal containing a touch screen. As shown in Fig. 2A, the method for sending a message includes the following steps.

In step 201, an operation signal triggered by a single operation performed by a user on the touch screen is acquired.

The single operation refers to an operation performed on the touch screen during a period from a pointer device, for example the user's finger, contacting the touch screen to the pointer device leaving the touch screen. When the user performs the signal operation on the touch screen, he may perform at least one kind of sub-operation on the touch screen, and the sub-operation may be a slide operation or a stopover operation (i.e. keeping, for a predetermined duration, the pointer device in contact with the touch screen without moving the pointer device), for example. For example, during the single operation, the user may perform a slide operation once. Or, the user may perform the slide operation twice, and the termination position of the first slide operation is the start position of the second slide operation. Or, the user may perform a slide operation and a stopover operation, and the termination position of the slide operation is the operation position of the stopover operation. The operation manner of the single operation is not limited in the invention.

Since different single operations may trigger different operation signals, the terminal may record the sub-operation signal corresponding to each sub-operation of a single operation, and combines the sub-operation signals according to the performing sequence of the sub-operations to form an operation signal corresponding to the single operation. For example, when the single operation performed by the user on the touch screen includes one slide operation, the terminal may record a slide signal triggered by the slide operation, and determines the slide signal as the operation signal. For another example, when the single operation performed by the user on the touch screen includes a slide operation and a stopover operation which are performed in sequence, the terminal may record a slide signal triggered by the slide operation, and then may record a stopover signal triggered by the stopover operation, and may combine the slide signal and the stopover signal to form the operation signal.

In order to avoid that the terminal acquires operation signals triggered by all of the single operations performed by the user on the touch screen, a condition for the terminal acquiring operation signals may be preset. For example, the terminal acquires operation signals when it receives a particular signal, or the terminal acquires operation signals when a predetermined page of a particular application is opened, and so on. The predetermined page may be a message-list page of a short message application for example.

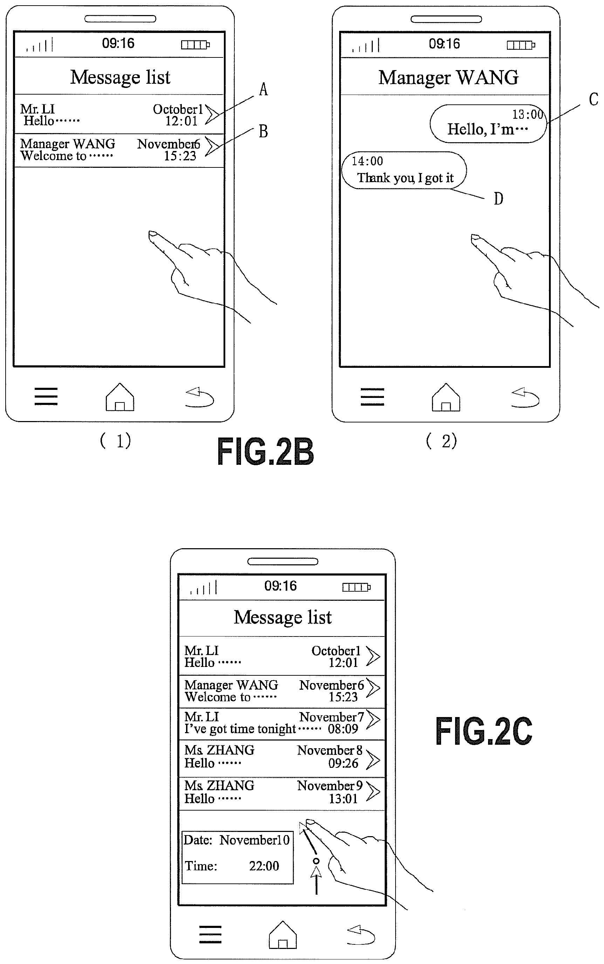

Referring to Fig.2B, it shows a schematic diagram of a message-list page. In the present embodiment, the message-list page may include at least one message list therein. Each message list may contain messages communicated between a user and other users. In Fig.2B(1), the message-list page include a message list A which contains messages communicated between the user and Mr. LI, and a message list B which contains messages communicated between the user and Manager WANG. Or, the message-list page may include one message list which contains messages communicated between a user and another user. In Fig.2B(2), the massage list contains a message C which is a message sent from the user to Manager WANG at 13:00, and a message D which is a message sent from Manager WANG to the user at 14:00.

When the condition is that the terminal acquires an operation signal when a predetermined page of a particular application is opened, the terminal may detect whether the predetermined page is opened, and after it detects that the predetermined page is opened, the terminal acquires an operation signal triggered by a single operation performed by the user on the touch screen.

In step 202, sending time of a message is determined according to the operation signal.

After the operation signal is acquired, the terminal may determine the sending time of a message according to the operation signal, and the sending time is for sending the message with a delay. The message may be a short message edited through an application program such as a short message application, or may also be an instant message edited through an instant communication tool. The type of the message is not limited in the present disclosure.

In the invention, the step of determining sending time of a message according to the operation signal, includes steps of:
1) if the sending time includes at least one time item, for each time item, acquiring a sub-operation signal in the operation signal corresponding to the time item, and determining a corresponding value of the time item according to the sub-operation signal; the sub-operation signal being a signal triggered by a sub-operation included in the single operation, and the time item being at least one of year, month, day, hour, minute and second; and
2) combining values of all the time items to form the sending time.

Since the sending time consists of time items such as year, month, day, hour, minute and second, a sub-operation may be set for each time item, and the value of the time item may be determined according to the sub-operation signal triggered by the sub-operation. For example, the hour may be determined through a slide signal, and the minute may be determined through a stopover signal, and so on. After the value of each time item is determined, the terminal may combines the values of all the time items to form the sending time. By using the same example, the numerical value of the hour is determined as 10 according to the slide operation, and the numerical value of the minute is determined as 10 according to the stopover operation, and thus the sending time may be determined as 10:10.

Before a value of a time item is determined, a sub-operation signal corresponding to the time item needs to be acquired. Therefore, the step of acquiring a sub-operation signal corresponding to the time item in the operation signal, includes steps of:
1) if the operation signal includes at least one slide signal and at least one stopover signal and each stopover signal is adjacent, in time, to two slide signals, determining an *i^{th}* sub-operation signal in the operation signal as a sub-operation signal corresponding to an *i^{th}* time item, the sub-operation signal being a slide signal or a stopover signal;
2) if the operation signal includes at least two slide signals and these adjacent-in-time slide signals correspond to slide sub-operations having different slide directions, determining an *i^{th}* slide signal in the operation signal as a sub-operation signal corresponding to an *i^{th}* time item; and
3) if the operation signal includes at least two slide signals and at least one stopover signal and each stopover signal is adjacent, in time, to two slide signals, when a stopover time period (i.e. the duration) of the stopover sub-operation corresponding to each stopover signal exceeds a predetermined threshold, determining an *i^{th}* slide signal in the operation signal as a sub-operation signal corresponding to an *i^{lh}* time item;
wherein *i* is a natural number. In the invention, a natural number starts with 1.

In a first implementation, the operation signal includes at least one slide signal and at least one stopover signal and each stopover signal is adjacent in time to two slide signals. In this example, during the single operation, a stopover sub-operation is performed after performing each slide sub-operation, and a slide sub-operation is performed after performing each stopover sub-operation. That is, one stopover sub-operation is interposed between every two slide sub-operations. Since the types of sub-operations are different in this example (slide, stopover), the terminal may distinguish time items according to the types of the sub-operation signals corresponding to the sub-operations. That is, both of the slide signal and the stopover signal may be used to determine the value of the time items. Therefore, one sub-operation signal in an operation signal may correspond to one time item. That is, an *i^{th}* sub-operation signal corresponds to an *i^{,h}* time item, and *i* is a natural number.

For example, the single operation includes two slide sub-operations and one stopover sub-operation. During the single operation, firstly, a first slide sub-operation is performed; then, a stopover sub-operation is performed at the termination position of the first slide sub-operation; next, a second slide sub-operation is performed with the operation position of the stopover sub-operation as the start position. Since respective sub-operations are performed in sequence, the first sub-operation signal in the operation signal is the first slide signal; the second sub-operation signal is the stopover signal; and the third sub-operation signal is the second slide signal. Therefore, the first slide signal corresponds to the first time item, the stopover signal corresponds to the second time item, and the second slide signal corresponds to the third time item. Referring to Fig.2C, it shows a schematic diagram of a first kind of single operation. The lower arrow denotes the first slide sub-operation, the dot denotes the stopover sub-operation, and the upper arrow denotes the second slide sub-operation.

In a practical embodiment, when the last-performed operation is a stopover sub-operation, the corresponding last stopover signal is adjacent in time to a previous slide signal.

In a second embodiment, the operation signal includes at least two slide signals and adjacent-in-time slide signals correspond to slide sub-operations having different slide directions. Since the adjacent-in-time slide signals correspond to slide sub-operations having different slide directions, the terminal may distinguish time items according the slide directions of the slide sub-operations corresponding to the slide signals. That is, each slide signal may be used to determine a value of a time item, Therefore, one slide signal in the operation signal corresponds to one time item. That is, an *i^{th}* slide signal corresponds to an *i^{th}* time item, and *i* is a natural number.

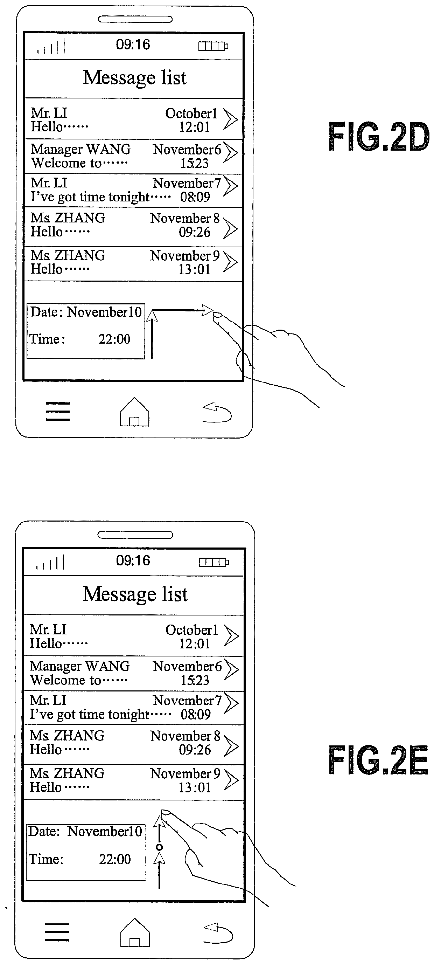

For example, the single operation includes two slide sub-operations. In the single operation, firstly, a first slide sub-operation is performed upwards; then, a second slide sub-operation is performed rightward with the termination position of the first slide sub-operation as the start position. Since respective sub-operations are performed in sequence, the first sub-operation signal in the operation signal is the first slide signal, and the second sub-operation signal is the second slide signal. Therefore, the first slide signal corresponds to the first time item, and the second slide signal corresponds to the second time item. Referring to Fig.2D, it shows a schematic diagram of a second kind of single operation. The upward arrow denotes the first slide sub-operation, and the rightward arrow denotes the second slide sub-operation. Here, no stopover signal is acquired between the two slide signals, these two slides signals correspond to two slide sub-operations that differ from each other by a different slide direction.

In a third embodiment, the operation signal includes at least two slide signals and at least one stopover signal, and each stopover signal is adjacent in time to two slide signals. During a single operation, a stopover sub-operation is performed after performing each slide sub-operation, and a slide sub-operation is performed after performing each stopover sub-operation. That is, one stopover sub-operation is interposed between every two slide sub-operations. Since two slide sub-operations are interposed with a stopover sub-operation, the terminal may distinguish time items according to the slide signals. That is, each slide signal may be used to determine a value of a time item. Therefore, one slide signal in an operation signal may correspond to one time item. That is, an *i^{th}* slide signal corresponds to an *i^{th}* time item, and *i* is a natural number.

For example, the single operation includes two slide sub-operations and one stopover sub-operation. In the single operation, firstly, a first slide sub-operation is performed; then, a stopover sub-operation is performed at the termination position of the first slide sub-operation; next, a second slide sub-operation is performed with the operation position of the stopover operation as the start position. After the stopover signal is acquired, the terminal needs to detect whether a stopover time period (i.e. duration) of the stopover sub-operation corresponding to each stopover signal exceeds a predetermined threshold. If so, a slide sub-operation performed afterwards is determined as a new slide sub-operation. If it is detected that the stopover time period does not exceed the predetermined threshold, the slide sub-operation performed afterwards is determined as a slide sub-operation for modifying a previous slide sub-operation. That is, the slide sub-operation performed afterwards is a continuation of the previous slide sub-operation. The predetermined threshold may be set and modified by the user. For example, the predetermined threshold may be set as 3 seconds, or, the predetermined threshold may be modified to 5 seconds, and so on.

If the stopover time period exceeds the predetermined threshold, since respective sub-operations are performed in sequence, the operation signal includes the first slide signal and the second slide signal. That is, the first slide signal corresponds to the first time item, and the second slide signal corresponds to the second time item. Referring to Fig.2E, it shows a schematic diagram of a third kind of single operation. The lower arrow denotes the first slide operation, the dot denotes the stopover operation, and the upper arrow denotes the second slide operation. Here, the two slide sub-operations differ from each other by the stopover sub-operation whose stopover time period exceeds the predetermined threshold.

Since the operation signal is used for determining the sending time for delayed sending, in order to ensure consistency between the single operation and the sending time, the slide sub-direction may be determined according to the arrangement of the messages in the message list. In an embodiment, the messages in a message list are arranged from top to down in order of time from earliest to latest, and the latest message is arranged at the lowermost of the message list. Since the sending time is later than the receiving time of the latest message, a upward slide sub-operation from bottom to top of the message list may be determined as a single operation, and the larger the distance of the upward slide sub-operation is, the later the sending time will be determined. In another embodiment, the messages in the message list are arranged from top to down in order of time from latest to earliest, and the latest message is arranged at the uppermost of the message list. Since the sending time is later than the receiving time of the latest message, a downward slide sub-operation from top to bottom of the message list may be determined as a single operation, and the larger the distance of the downward slide is, the later the sending time will be determined.

Thus time items are determined according to sub-operation signals . Since the sub-operation signals are various, the ways for determining values of the time items according to the sub-operation signals are various. In the embodiment described herein, illustration will be made taking an example where the sub-operation signals triggered during the single operation comprise a slide signal and a stopover signal. Thus, the step of determining a corresponding value of the time item according to the sub-operation signal, includes steps of:
1) if the sub-operation signal is a slide signal, determining the value of the time item according to a slide distance of the slide sub-operation corresponding to the slide signal, the slide distance positively correlating to the value of the time item; or
2) if the sub-operation signal is a stopover signal, determining the value of the time item according to a stopover time period of the stopover sub-operation corresponding to the stopover signal, the stopover time period positively correlating to the value of the time item.

In this example, the terminal determines the time item according to the slide distance, and the slide distance positively correlates to the value of the time item. The terminal may preset a positive correlation between the slide distance and the value of the time item. For example, for the time item of "hour", the value of the time item may be calculated in real time according to the slide distance. For example, if the slide distance is 3mm, the value of the item is calculated as 1 hour; if the slide distance is 6mm, the value of the time item is calculated as 2 hours and so on. Or, the slide distance may be divided into small intervals, and the value of the time item is adjusted according to the small intervals of the slide distance. For example, if the slide distance is 1-3 mm, the value of the time item is set as 1 hour; if the slide distance is 3-6 mm, the value of the time item is set as 2 hours, and so on. This is not limited in the invention. Similarly, the terminal may set the positive correlation between the stopover time period and the value of the time item. The setting method is similar to the above, and will not be repeated here.

It should be further noted that, in the process of determining the value of the time item according the sub-operation signal, the value of the time item may be displayed. That is, the method for sending a message provided by the present embodiment may further include a step of displaying in real time the value of the time item determined according to the sub-operation signal.

In order to improve the efficiency of setting the sending time, during the process when a user performs sub-operations of a single operation, the terminal may calculate the time item in real time according to the sub-operation signal, and display the time item, such that the user may determine whether to keep increasing the value of the time item or keep decreasing the value of the time item according to the displayed time item.

In the present embodiment, the terminal may determine sending time of a message according to a single operation, without selecting options in each time option item by pressing an upward button and a downward button for many times to determine the sending time of the message. Thus, time consumed in setting the sending time may be significantly saved, and thereby the efficiency in setting a message is improved.

In step 203, after the single operation is finished, it is detected whether a confirmation signal is received. The confirmation signal is configured to confirm that the determined sending time is accurate. If it is detected that the confirmation signal is received, of the method goes to step 204; and if it is detected that the confirmation signal is not received, the method goes to step 201.

After the sending time is determined according to the operation signal, the terminal may ask the user to confirm whether the sending time is accurate. At this time, the terminal may detect whether a confirmation signal is received for example from the user by touching the touch screen via the pointer device. If it is detected that the confirmation signal is received, the method goes to step 204; and if it is detected that the confirmation signal is not received and a new operation signal is acquired, and the sending time is determined according to the acquired operation signal. That is, step 201 is performed.

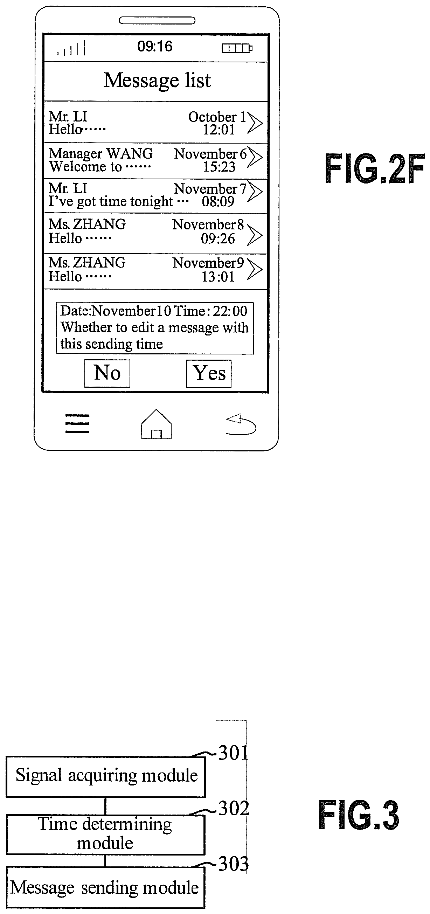

It should be further noted that, the terminal may allow the user to edit the message after the sending time is determined. Therefore, the terminal may inquire the user whether to edit a message at the determined sending time to acquire the confirmation signal. Referring to Fig.2F, it shows a schematic diagram of inquiring whether to edit a message at the determined sending time. Before a confirmation signal is received, the terminal may display an inquiring message "whether to edit a message with this sending time" in the interface, and provides a "yes" option and a "no" option. When the terminal receives a signal triggered by tapping the "yes" option by a user, it is determined that the sending time is accurate, and the signal is determined as the confirmation signal. When the terminal receives a signal triggered by tapping the "no" option by the user, it is determined that the sending time is not accurate, and the confirmation signal is deemed not received.

In step 204, the edited message is obtained.

The terminal may allow the massage contents to be edited by the user in a corresponding application program to obtain the message. In the present embodiment, the message may be a short message edited through an application program such as a short message application, or may also be an instant message edited through an instant communication tool. The type of the message is not limited in invention. Contents of the message may include at least one of a text, a picture, an audio and a video.

In the present embodiment, step 204 needs to be performed before step 205. The performing sequence of step 204 and steps 201-203 is not limited in the present embodiment. If step 204 is performed before step 201, the message may be obtained upon receiving a particular signal by the terminal, or upon receiving a predetermined control signal when the terminal detects that a message-list page is opened, and the predetermined control signal may be a long-press signal, a double-tap signal, or the like.

In step 205, the message is sent when it is monitored that system time of the terminal reaches the sending time.

Since the terminal may send a message with a delay, after the message and the sending time of the message are determined, the terminal may cache the message, and monitor the system time. When the terminal monitors that the system time reaches the sending time of the message, the terminal sends the message.

It should be further noted that, the method for sending a message provided by the present embodiment may further include steps of:
1) adding the message to a delayed-sending queue, the delayed-sending queue being configured to store a message to be sent;
2) receiving an editing signal with respect to the message stored in the delayed-message queue; and
3) editing the message according to the editing signal.

Before a message is sent, the terminal may add the message to the delayed-sending queue to store it. When the terminal monitors that the system time reaches the sending time, it moves the message from the delayed-sending queue to an instant-sending queue, and sends the message from the instant-sending queue.

In an embodiment, when the terminal stores the message in the delayed-sending queue, the system has not yet reached the sending time. The terminal may display the message to a user through a predetermined UI (User Interface). If the user needs to edit the message, he may trigger the editing signal by using the predetermined UI to edit the contents of the message. After receiving the editing signal comprising the edited message contents, the terminal edits the message according to the editing signal. For example, the terminal may add or delete message contents to or from the message, or, the terminal may advance or postpone the sending time of the message. The editing manner of the message is not limited in the present embodiment. The terminal may edit the message contents, and may correct wrong contents in the message, thereby avoiding sending a wrong message and thus improving the accuracy of the message.

Accordingly, in the method for sending a message provided by the invention, an operation signal triggered by a single operation performed by a user on a touch screen is acquired, sending time of a message is determined according to the operation signal, and the message is sent when it is monitored that system time of the terminal reaches the sending time. The sending time of the message may be determined by acquiring an operation signal triggered by a single operation performed by a user on the touch screen, without selecting options in each time option item by pressing an upward button and a downward button for many times to edit the sending time of the message. Thus, the method may solve the problem that determining sending time by pressing an upward button and a downward button for many times consumes a large quantity of time, which results in relatively low setting efficiency. Consequently, an effect of improved efficiency in setting a message is achieved.

In addition, the obtained message is added to a delayed-sending queue which is configured to store a message to be sent; an editing signal with respect to the message stored in the delayed-message queue is received; and the message is edited according to the editing signal. Thus, the message may be edited (or updated) before the system time reaches the sending time, and wrong contents in the message may be corrected, thereby avoiding sending a wrong message and thus improving the accuracy of the message.

Fig.3 is a block diagram of a device for sending a message according to an exemplary embodiment. The device for sending a message may be applied in a terminal containing a touch screen. As shown in Fig.3, the device for sending a message includes a signal acquiring module 301, a time determining module 302 and a message sending module 303.

The signal acquiring module 301 is configured to acquire an operation signal triggered by a single operation performed by a user on the touch screen.

The time determining module 302 is configured to determine sending time of a message according to the operation signal acquired by the signal acquiring module 301.

The message sending module 303 is configured to send the message when it is monitored that system time of the terminal reaches the sending time determined by the time determining module 302.

Accordingly, in the device for sending a message provided by the invention, an operation signal triggered by a single operation performed by a user on a touch screen is acquired, sending time of a message is determined according to the operation signal, and the message is sent when it is monitored that system time of the terminal reaches the sending time. The sending time of the message may be determined by acquiring an operation signal triggered by a single operation performed by a user on the touch screen, without selecting options in each time option item by pressing an upward button and a downward button for many times to edit the sending time of the message. Thus, the device may solve the problem that determining sending time by pressing an upward button and a downward button for many times consumes a large quantity of time, which results in relatively low setting efficiency. Consequently, an effect of improved efficiency in setting a message is achieved.

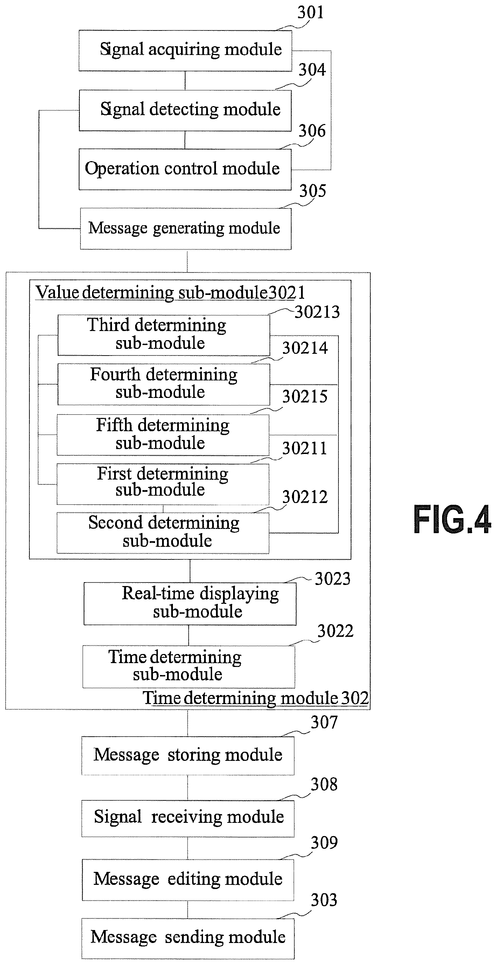

Fig.4 is a block diagram of a device for sending a message according to another exemplary embodiment. The device for sending a message may be applied in a terminal containing a touch screen. As shown in Fig.4, the device for sending a message includes a signal acquiring module 301, a time determining module 302 and a message sending module 303.

The signal acquiring module 301 is configured to acquire an operation signal triggered by a single operation performed by a user on the touch screen.

The time determining module 302 is configured to determine sending time of a message according to the operation signal acquired by the signal acquiring module 301.

The message sending module 303 is configured to send the message when it is monitored that system time of the terminal reaches the sending time determined by the time determining module 302.

In an embodiment, the time determining module 302 may include a value determining sub-module 3021 and a time determining sub-module 3022.

The value determining sub-module 3021 is configured to, if the sending time includes at least one time item, for each time item, acquire a sub-operation signal corresponding to the time item in the operation signal, and determine a corresponding value of the time item according to the sub-operation signal. The sub-operation signal is a signal triggered by a sub-operation included in the single operation, and the time item is at least one of year, month, day, hour, minute and second.

The time determining sub-module 3022 is configured to combine values of all the time items determined by the value determining sub-module 3021 to form the sending time.

In an embodiment, the value determining sub-module 3021 may include a first determining sub-module 30211 and/or a second determining sub-module 30212.

The first determining sub-module 30211 is configured to, if the sub-operation signal is a slide signal, determine the value of the time item according to a slide distance of the slide sub-operation corresponding to the slide signal. The slide distance positively correlates to the value of the time item.

The second determining sub-module 30212 is configured to, if the sub-operation signal is a stopover signal, determine the value of the time item according to a stopover time period of the stopover sub-operation corresponding to the stopover signal. The stopover time period positively correlates to the value of the time item.

In an embodiment, the time determining module 302 may further include a real-time displaying sub-module 3023.

The real-time displaying sub-module 3023 is configured to display in real time the value of the time item determined according to the sub-operation signal.

In an embodiment, the value determining sub-module 3021 may include a third determining sub-module 30213, a fourth determining sub-module 30214 or a fifth determining sub-module 30215.

The third determining sub-module 30213 is configured to, if the operation signal includes at least one slide signal and at least one stopover signal and each stopover signal is adjacent in time to two slide signals, determine an *i^{th}* sub-operation signal in the operation signal as a sub-operation signal corresponding to an *i^{th}* time item, and the sub-operation signal is a slide signal or a stopover signal.

The fourth determining sub-module 30214 is configured to, if the operation signal includes at least two slide signals and adjacent-in-time slide signals correspond to slide sub-operations having different slide directions, determine an *i^{th}* slide signal in the operation signal as a sub-operation signal corresponding to an *i^{th}* time item.

The fifth determining sub-module 30215 is configured to, if the operation signal includes at least two slide signals and at least one stopover signal and each stopover signal is adjacent in time to two slide signals, when a stopover time period of the stopover sub-operation corresponding to each stopover signal exceeds a predetermined threshold, determine an *i^{th}* slide signal in the operation signal as a sub-operation signal corresponding to an *i^{th}* time item, and *i* is a natural number.

In an embodiment, the device for sending a message provided by the present embodiment may further include a signal detecting module 304, a message generating module 305 and an operation control module 306.

The signal detecting module 304 is configured to, after the single operation is finished, detect whether a confirmation signal is received. The confirmation signal is configured to confirm that the determined sending time is accurate.

The message generating module 305 is configured to, if the signal detecting module 304 detects that the confirmation signal is received, edit massage contents to obtain the message.

The operation control module 306 is configured to, if the signal detecting module 304 detects that the confirmation signal is not received, control the terminal to acquire an operation signal triggered by a single operation performed by a user on the touch screen.

In an embodiment, the device for sending a message provided by the present embodiment may further include a message storing module 307, a signal receiving module 308 and a message editing module 309.

The message storing module 307 is configured to add the message to a delayed-sending queue which is configured to store a message to be sent.

The signal receiving module 308 is configured to receive an editing signal with respect to the message stored in the delayed-message queue by the message storing module 307.

The message editing module 309 is configured to edit the message according to the editing signal received by the signal receiving module 308.

Accordingly, in the device for sending a message provided by the invention, an operation signal triggered by a single operation performed by a user on a touch screen is acquired, sending time of a message is determined according to the operation signal, and the message is sent when it is monitored that system time of the terminal reaches the sending time. The sending time of the message may be determined by acquiring an operation signal triggered by a single operation performed by a user on the touch screen, without selecting options in each time option item by pressing an upward button and a downward button for many times to determine the sending time of the message. Thus, the device may solve the problem that determining sending time by pressing an upward button and a downward button for many times consumes a large quantity of time, which results in relatively low setting efficiency. Consequently, an effect of improved efficiency in setting a message is achieved.

In addition, the obtained message is added to a delayed-sending queue which is configured to store a message to be sent; an editing signal with respect to the message stored in the delayed-message queue is received; and the message is edited according to the editing signal. Thus, the message may be edited or updated before the system time reaches the sending time, and wrong contents in the message may be corrected, thereby avoiding sending a wrong message and thus improving the accuracy of the message.

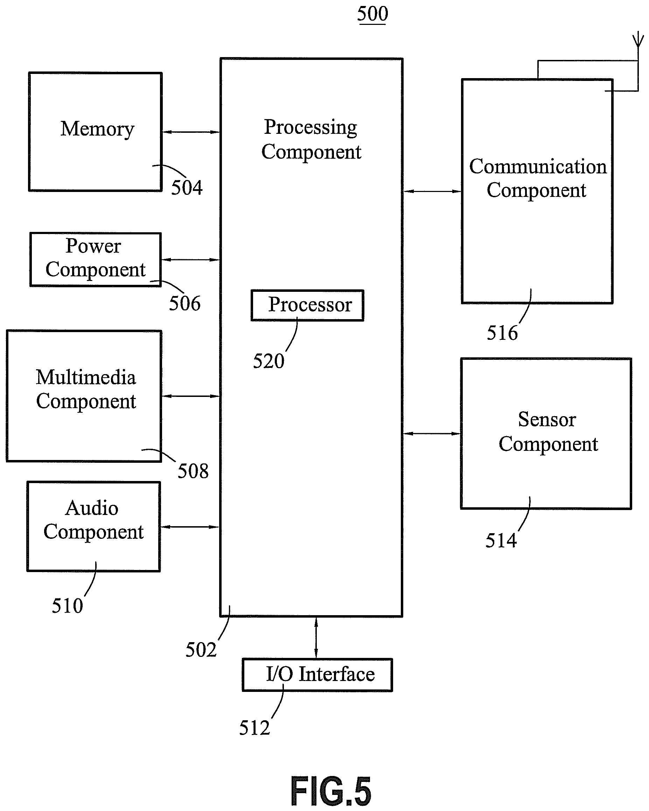

Fig.5 is a block diagram of a device 500 for sending a message according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig.5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slides, and gestures on the touch panel. The touch sensors may not only sense a boundary of a touch or slide action, but also sense a period of time and a pressure associated with the touch or slide action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In exemplary embodiments, there is also provided a non-transitory computer-readable storage medium including instructions, such as included in the memory 504, executable by the processor 520 in the device 500, for performing the above methods. For example, the non-transitory computer-readable storage medium may be a ROM, a RAM, a CD-ROM, a magnetic tape, a floppy disc, an optical data storage device, and the like.

## Claims

1. A method for sending a message, the method being applied in a terminal containing a touch screen, and the method being **characterized in** comprising steps of:
acquiring (101, 201) an operation signal triggered by a single operation performed by a user on the touch screen, the single operation being an operation performed during a period from a pointer device contacting the touch screen to the pointer device leaving the touch screen, the single operation comprising at least one kind of sub-operation; and
determining (102, 202) a sending time of the message according to the operation signal,
wherein the sub-operation is a slide operation or a stopover operation, and the acquiring (101, 201) step comprises:
recording a sub-operation signal corresponding to each of the at least one sub-operation of the single operation; and
combining the at least one sub-operation signal according to a performing sequence of the at least one sub-operation to form the operation signal corresponding to the single operation;
wherein the method further comprises:
after the single operation is finished, displaying an inquiring message to detect (203) whether a confirmation signal is received, said confirmation signal being for confirming that the sending time determined according to the operation signal is accurate,
when a signal triggered by a user tapping of a yes option for the inquiring message is received, determining that the confirmation signal is received;
when a signal triggered by a user tapping of a no option for the inquiring message is received, determining that the confirmation signal is not received;
if it is detected that the confirmation signal is received, obtaining and sending the message when it is monitored that system time of the terminal reaches the sending time; and
if it is detected that the confirmation signal is not received and that a new operation signal is acquired, determining the sending time according to the new operation signal.

2. The method according to claim 1, **characterized in that**, the step of determining (102) sending time of a message according to the operation signal, comprises steps of:
if the sending time comprises at least one time item, for each time item, acquiring a sub-operation signal corresponding to the time item in the operation signal, and determining a corresponding value of the time item according to the sub-operation signal;
the sub-operation signal being a signal triggered by a sub-operation comprised in the single operation, and the time item being at least one of year, month, day, hour, minute and second; and
combining values of all the time items to form the sending time.

3. The method according to claim 2, **characterized in that**, the step of determining a corresponding value of the time item according to the sub-operation signal, comprises steps of:
if the sub-operation signal is a slide signal, determining the value of the time item according to a slide distance of a slide sub-operation corresponding to the slide signal, the slide distance positively correlating to the value of the time item; and
if the sub-operation signal is a stopover signal, determining the value of the time item according to a stopover time period of a stopover sub-operation corresponding to the stopover signal, the stopover time period positively correlating to the value of the time item.

4. The method according to claim 2 or 3, **characterized in that**, the method further comprises a step of:
displaying in real time the value of the time item determined according to the sub-operation signal.

5. The method according to claim 2, **characterized in that**, the step of acquiring a sub-operation signal corresponding to the time item in the operation signal, comprises steps of:
if the operation signal comprises at least one slide signal and at least one stopover signal and each stopover signal is adjacent in time to two slide signals, determining an *i^{th}* sub-operation signal in the operation signal as a sub-operation signal corresponding to an *i^{th}* time item, the sub-operation signal being a slide signal or a stopover signal;
if the operation signal comprises at least two slide signals and these adjacent-in-time slide signals correspond to slide sub-operations having different slide directions, determining an *i^{th}* slide signal in the operation signal as a sub-operation signal corresponding to an *i^{th}* time item; and
if the operation signal comprises at least two slide signals and at least one stopover signal and each stopover signal is adjacent in time to two slide signals, when a stopover time period of a stopover sub-operation corresponding to each stopover signal exceeds a predetermined threshold, determining an *i^{th}* slide signal in the operation signal as a sub-operation signal corresponding to an *i^{th}* time item;
wherein i is a natural number.

6. The method according to any one of claims 1 to 5, **characterized in that**, the method further comprises steps of:
adding the message into a delayed-sending queue, the delayed-sending queue being configured to store a message to be sent;
receiving an editing signal with respect to the message stored in the delayed-sending queue; and
editing the message according to the editing signal.

7. A device for sending a message, comprising:
a time determining module (302) ; a message sending module (303) configured to send the message when it is monitored that system time of a terminal reaches a sending time determined by the time determining module (302);
the device being **characterized in that**:
the device is a terminal containing a touch screen;
the device comprises a signal acquiring module (301) configured to acquire an operation signal triggered by a single operation performed by a user on the touch screen, the single operation being an operation performed during a period from a pointer device contacting the touch screen to the pointer device leaving the touch screen, the single operation comprising at least one kind of sub-operation,
wherein the sub-operation is a slide operation or a stopover operation and in acquiring the operation signal triggered by the single operation, the signal acquiring module (301) is further configured to:
record a sub-operation signal corresponding to each of the at least one sub-operation of the single operation; and
combine the at least one sub-operation signal according to a performing sequence of the at least one sub-operation to form the operation signal corresponding to the single operation;
wherein the time determining module (302) is configured to determine the sending time of the message according to the operation signal acquired by the signal acquiring module (301);
wherein the device further includes:
a signal detecting module (304) configured to, after the single operation is finished, display an inquiring message to detect (203) whether a confirmation signal is received, said confirmation signal being for confirming that the sending time determined according to the operation signal is accurate, and when a signal triggered by a user tapping of a yes option for the inquiring message is received, determine that the confirmation signal is received, and when a signal triggered by a user tapping of a no option for the inquiring message is received, determine that the confirmation signal is not received;
a message generating module (305) configured to, if the signal detecting module (304) detects that the confirmation signal is received, obtain and send the message; and
an operation control module (306) configured to, if the signal detecting module (304) detects that the confirmation signal is not received and that a new operation signal is acquired, determine the sending time according to the new operation signal.

8. The device according to claim 7, **characterized in that**, the time determining module (302) comprises:
a value determining sub-module (3021) configured to, if the sending time comprises at least one time item, for each time item, acquire a sub-operation signal corresponding to the time item in the operation signal, and determine a corresponding value of the time item according to the sub-operation signal; the sub-operation signal being a signal triggered by a sub-operation comprised in the single operation, and the time item being at least one of year, month, day, hour, minute and second; and
a time determining sub-module (3022) configured to combine values of all the time items determined by the value determining sub-module to form the sending time.

9. The device according to claim 8, **characterized in that**, the value determining sub-module (3021) comprises:
a first determining sub-module (30211) configured to, if the sub-operation signal is a slide signal, determine the value of the time item according to a slide distance of a slide sub-operation corresponding to the slide signal, the slide distance positively correlating to the value of the time item;
a second determining sub-module (30212) configured to, if the sub-operation signal is a stopover signal, determine the value of the time item according to a stopover time period of a stopover sub-operation corresponding to the stopover signal, the stopover time period positively correlating to the value of the time item;
a third determining sub-module (30213) configured to, if the operation signal comprises at least one slide signal and at least one stopover signal and each stopover signal is adjacent in time to two slide signals, determine an *i^{th}* sub-operation signal in the operation signal as a sub-operation signal corresponding to an *i^{th}* time item, the sub-operation signal being a slide signal or a stopover signal;
a fourth determining sub-module (30214) configured to, if the operation signal comprises at least two slide signals and these adjacent-in-time slide signals correspond to slide sub-operations having different slide directions, determine an *i^{th}* slide signal in the operation signal as a sub-operation signal corresponding to an *i^{th}* time item; or
a fifth determining sub-module (30215) configured to, if the operation signal comprises at least two slide signals and at least one stopover signal and each stopover signal is adjacent in time to two slide signals, when a stopover time period of a stopover sub-operation corresponding to each stopover signal exceeds a predetermined threshold, determine an *i^{th}* slide signal in the operation signal as a sub-operation signal corresponding to an *i^{th}* time item;
wherein *i* is a natural number..

10. The device according to claim 8 or 9, **characterized in that**, the time determining module (302) further comprises:
a real-time displaying sub-module (3023) configured to display in real time the value of the time item determined according to the sub-operation signal.

11. The device according to any one of claims 7 to 10, **characterized in that**, the device further comprises:
a message storing module (307) configured to add the message into a delayed-sending queue, the delayed-sending queue being configured to store a message to be sent;
a signal receiving module (308) configured to receive an editing signal with respect to the message stored in the delayed-message queue by the message storing module (307); and
a message editing module (309) configured to edit the message according to the editing signal received by the signal receiving module (308).

12. A computer program product including instructions which, when executed by a processor, cause said processor to perform the method according to any one of claims 1 to 6.

13. A recording medium readable by a computer and having recorded thereon the computer program product as defined in claim 12.

## Patentansprüche

1. Verfahren zum Senden einer Nachricht, wobei das Verfahren in einem Endgerät angewendet wird, das einen Touchscreen enthält, und wobei das Verfahren **dadurch gekennzeichnet ist, dass** es die folgenden Schritte umfasst:
Erfassen (101, 201) eines Operationssignals, das durch eine einzelne Operation ausgelöst wird, die von einem Benutzer auf dem Touchscreen durchgeführt wird, wobei die einzelne Operation eine Operation ist, die während einer Periode vom Berühren des Touchscreens durch eine Zeigervorrichtung bis zum Verlassen des Touchscreens durch die Zeigervorrichtung durchgeführt wird, wobei die einzelne Operation mindestens eine Art einer Unteroperation umfasst; und
Bestimmen (102, 202) einer Sendezeit der Nachricht gemäß dem Operationssignal,
wobei die Unteroperation eine Gleitoperation oder eine Zwischenhaltoperation ist, und der Schritt des Erfassens (101, 201) Folgendes umfasst:
Aufzeichnen eines Unteroperationssignals, das jeder der mindestens einen Unteroperation der einzelnen Operation entspricht; und
Kombinieren des mindestens einen Unteroperationssignals gemäß einer Durchführungssequenz der mindestens einen Unteroperation, um das Operationssignal zu bilden, das der einzelnen Operation entspricht;
wobei das Verfahren ferner Folgendes umfasst:
Anzeigen einer Abfragenachricht, um zu detektieren (203), ob ein Bestätigungssignal empfangen wurde, nachdem die einzelne Operation beendet wurde, wobei das Bestätigungssignal dem Bestätigen dient, dass die Sendezeit, die gemäß dem Operationssignal bestimmt wird, genau ist,
Bestimmen, dass das Bestätigungssignal empfangen wurde, wenn ein Signal empfangen wird, das durch Tippen einer Ja-Option durch einen Benutzer für die Abfragenachricht ausgelöst wird;
Bestimmen, dass das Bestätigungssignal nicht empfangen wurde, wenn ein Signal empfangen wird, das durch Tippen einer Nein-Option durch einen Benutzer für die Abfragenachricht ausgelöst wird;
Erhalten und Senden der Nachricht, wenn überwacht wird, dass die Systemzeit des Endgeräts die Sendezeit erreicht hat, wenn detektiert wird, dass das Bestätigungssignal empfangen wurde; und
wenn detektiert wird, dass das Bestätigungssignal nicht empfangen wurde und ein neues Operationssignal erfasst wurde, Bestimmen der Sendezeit gemäß dem neuen Operationssignal.

2. Verfahren nach Anspruch 1, **dadurch gekennzeichnet, dass** der Schritt des Bestimmens (102) einer Sendezeit einer Nachricht gemäß dem Operationssignal die folgenden Schritte umfasst:
wenn die Sendezeit mindestens ein Zeitelement umfasst, Erfassen eines Unteroperationssignals, das dem Zeitelement im Operationssignal entspricht, für jedes Zeitelement und Bestimmen eines entsprechenden Wertes des Zeitelements gemäß dem Unteroperationssignal; wobei das Unteroperationssignal ein Signal ist, das von einer Unteroperation ausgelöst wird, die in der einzelnen Operation umfasst ist, und wobei das Zeitelement mindestens eines von Jahr, Monat, Tag, Stunde, Minute und Sekunde ist; und
Kombinieren von Werten von allen Zeitelementen, um die Sendezeit zu bilden.

3. Verfahren nach Anspruch 2, **dadurch gekennzeichnet, dass** der Schritt des Bestimmens eines entsprechenden Wertes des Zeitelements gemäß dem Unteroperationssignal die folgenden Schritte umfasst:
wenn das Unteroperationssignal ein Gleitsignal ist, Bestimmen des Wertes des Zeitelements gemäß einem Gleitabstand einer Gleitunteroperation, die dem Gleitsignal entspricht, wobei der Gleitabstand positiv mit dem Wert des Zeitelements korreliert; und
wenn das Unteroperationssignal ein Zwischenhaltsignal ist, Bestimmen des Wertes des Zeitelements gemäß einer Zwischenhaltzeitperiode einer Zwischenhaltunteroperation, die dem Zwischenhaltsignal entspricht, wobei die Zwischenhaltzeitperiode positiv mit dem Wert des Zeitelements korreliert.

4. Verfahren nach Anspruch 2 oder 3, **dadurch gekennzeichnet, dass** das Verfahren ferner einen folgenden Schritt umfasst:
Anzeigen des Wertes des Zeitelements, der gemäß dem Unteroperationssignal bestimmt wurde, in Echtzeit.

5. Verfahren nach Anspruch 2, **dadurch gekennzeichnet, dass** der Schritt des Erfassens eines Unteroperationssignals, das dem Zeitelement im Operationssignal entspricht, die folgenden Schritte umfasst:
wenn das Operationssignal mindestens ein Gleitsignal und mindestens ein Zwischenhaltsignal umfasst und jedes Zwischenhaltsignal zwei Gleitsignalen zeitlich benachbart ist, Bestimmen eines *i-ten* Unteroperationssignals im Operationssignal als ein Unteroperationssignal, das einem *i-ten* Zeitelement entspricht, wobei das Unteroperationssignal ein Gleitsignal oder ein Zwischenhaltsignal ist;
wenn das Operationssignal mindestens zwei Gleitsignale umfasst und diese zeitlich benachbarten Gleitsignale Gleitunteroperationen mit verschiedenen Gleitrichtungen entsprechen, bestimmen eines *i-ten* Gleitsignals im Operationssignal als ein Unteroperationssignal, das einem *i-ten* Zeitelement entspricht; und
wenn das Operationssignal mindestens zwei Gleitsignale und mindestens ein Zwischenhaltsignal umfasst und jedes Zwischenhaltsignal zwei Gleitsignalen zeitlich benachbart ist, Bestimmen eines *i-ten* Gleitsignals im Operationssignal als ein Unteroperationssignal, das einem *i-ten* Zeitelement entspricht, wenn eine Zwischenhaltzeitperiode einer Zwischenhaltunteroperation, die jedem Zwischenhaltsignal entspricht, einen vorbestimmten Schwellwert überschreitet;
wobei /eine natürliche Zahl ist.

6. Verfahren nach einem der Ansprüche 1 bis 5, **dadurch gekennzeichnet, dass** das Verfahren ferner die folgenden Schritte umfasst:
Hinzufügen der Nachricht zu einer Sendeverzögerungswarteschlange, wobei die Sendeverzögerungswarteschlange dazu ausgelegt ist, eine zu sendende Nachricht zu speichern;
Empfangen eines Bearbeitungssignals mit Bezug auf die in der Sendeverzögerungswarteschlange gespeicherte Nachricht; und
Bearbeiten der Nachricht gemäß dem Bearbeitungssignal.

7. Vorrichtung zum Senden einer Nachricht, die Folgendes umfasst:
ein Zeitbestimmungsmodul (302);
ein Nachrichtensendemodul (303), das dazu ausgelegt ist, die Nachricht zu senden, wenn überwacht wird, dass eine Systemzeit eines Endgeräts eine vom Zeitbestimmungsmodul (302) bestimmte Sendezeit erreicht;
wobei die Vorrichtung **dadurch gekennzeichnet ist, dass**:
die Vorrichtung ein Endgerät ist, das einen Touchscreen enthält;
die Vorrichtung ein Signalerfassungsmodul (301) umfasst, das dazu ausgelegt ist, ein Operationssignal zu erfassen, das durch eine einzelne Operation ausgelöst wird, die von einem Benutzer auf dem Touchscreen durchgeführt wird, wobei die einzelne Operation eine Operation ist, die während einer Periode vom Berühren des Touchscreens durch eine Zeigervorrichtung bis zum Verlassen des Touchscreens durch die Zeigervorrichtung durchgeführt wird, wobei die einzelne Operation mindestens eine Art einer Unteroperation umfasst,
wobei die Unteroperation eine Gleitoperation oder eine Zwischenhaltoperation ist und das Signalerfassungsmodul (301) beim Erfassen des von der einzelnen Operation ausgelösten Operationssignals ferner zu Folgendem ausgelegt ist:
Aufzeichnen eines Unteroperationssignals, das jeder der mindestens einen Unteroperation der einzelnen Operation entspricht; und
Kombinieren des mindestens einen Unteroperationssignals gemäß einer Durchführungssequenz der mindestens einen Unteroperation, um das Operationssignal zu bilden, das der einzelnen Operation entspricht;
wobei das Zeitbestimmungsmodul (302) dazu ausgelegt ist, die Sendezeit der Nachricht gemäß dem vom Signalerfassungsmodul (301) erfassten Operationssignal zu bestimmen;
wobei die Vorrichtung ferner Folgendes beinhaltet:
ein Signaldetektionsmodul (304), das dazu ausgelegt ist, eine Abfragenachricht anzuzeigen, um zu detektieren (203), ob ein Bestätigungssignal empfangen wurde, nachdem die einzelne Operation beendet wurde, wobei das Bestätigungssignal dem Bestätigen dient, dass die Sendezeit, die gemäß dem Operationssignal bestimmt wird, genau ist, und zu bestimmen, dass das Bestätigungssignal empfangen wurde, wenn ein Signal empfangen wird, das durch Tippen einer Ja-Option durch einen Benutzer für die Abfragenachricht ausgelöst wird, und zu bestimmen, dass das Bestätigungssignal nicht empfangen wurde, wenn ein Signal empfangen wird, das durch Tippen einer Nein-Option durch einen Benutzer für die Abfragenachricht ausgelöst wird;
ein Nachrichtenerzeugungsmodul (305), das, wenn das Signaldetektionsmodul (304) detektiert, dass das Bestätigungssignal empfangen wurde, dazu ausgelegt ist, die Nachricht zu erhalten und zu senden; und
ein Operationssteuermodul (306), das, wenn das Signaldetektionsmodul (304) detektiert, dass das Bestätigungssignal nicht empfangen wurde und dass ein neues Operationssignal erfasst wurde, dazu ausgelegt ist, die Sendezeit gemäß dem neuen Operationssignal zu bestimmen.

8. Vorrichtung nach Anspruch 7, **dadurch gekennzeichnet, dass** das Zeitbestimmungsmodul (302) Folgendes umfasst:
ein Wertbestimmungsuntermodul (3021), das, wenn die Sendezeit mindestens ein Zeitelement umfasst, dazu ausgelegt ist, für jedes Zeitelement ein Unteroperationssignal zu erfassen, das dem Zeitelement im Operationssignal entspricht, und einen entsprechenden Wert des Zeitelements gemäß dem Unteroperationssignal zu bestimmen; wobei das Unteroperationssignal ein Signal ist, das von einer Unteroperation ausgelöst wird, die in der einzelnen Operation umfasst ist, und wobei das Zeitelement mindestens eines von Jahr, Monat, Tag, Stunde, Minute und Sekunde ist; und
ein Zeitbestimmungsuntermodul (3022), das dazu ausgelegt ist, Werte von allen Zeitelementen zu bestimmen, die vom Wertbestimmungsuntermodul bestimmt werden, um die Sendezeit zu bilden.

9. Vorrichtung nach Anspruch 8, **dadurch gekennzeichnet, dass** das Wertbestimmungsuntermodul (3021) Folgendes umfasst:
ein erstes Bestimmungsuntermodul (30211), das, wenn das Unteroperationssignal ein Gleitsignal ist, dazu ausgelegt ist, den Wert des Zeitelements gemäß einem Gleitabstand einer Gleitunteroperation, die dem Gleitsignal entspricht, zu bestimmen, wobei der Gleitabstand positiv mit dem Wert des Zeitelements korreliert;
ein zweites Bestimmungsuntermodul (30212), das, wenn das Unteroperationssignal ein Zwischenhaltsignal ist, dazu ausgelegt ist, den Wert des Zeitelements gemäß einer Zwischenhaltzeitperiode einer Zwischenhaltunteroperation, die dem Zwischenhaltsignal entspricht, zu bestimmen, wobei die Zwischenhaltzeitperiode positiv mit dem Wert des Zeitelements korreliert;
ein drittes Bestimmungsuntermodul (30213), das, wenn das Operationssignal mindestens ein Gleitsignal und mindestens ein Zwischenhaltsignal umfasst und jedes Zwischenhaltsignal zwei Gleitsignalen zeitlich benachbart ist, dazu ausgelegt ist, ein *i-tes* Unteroperationssignal im Operationssignal als ein Unteroperationssignal, das einem *i-ten* Zeitelement entspricht, zu bestimmen, wobei das Unteroperationssignal ein Gleitsignal oder ein Zwischenhaltsignal ist;
ein viertes Bestimmungsuntermodul (30214), das, wenn das Operationssignal mindestens zwei Gleitsignale umfasst und diese zeitlich benachbarten Gleitsignale Gleitunteroperationen mit verschiedenen Gleitrichtungen entsprechen, dazu ausgelegt ist, ein *i-tes* Gleitsignal im Operationssignal als ein Unteroperationssignal, das einem *i-ten* Zeitelement entspricht; zu bestimmen; oder
ein fünftes Bestimmungsuntermodul (30215), das, wenn das Operationssignal mindestens zwei Gleitsignale und mindestens ein Zwischenhaltsignal umfasst und jedes Zwischenhaltsignal zwei Gleitsignalen zeitlich benachbart ist, dazu ausgelegt ist, ein *i-tes* Gleitsignal im Operationssignal als ein Unteroperationssignal, das einem *i-ten* Zeitelement entspricht, zu bestimmen, wenn eine Zwischenhaltzeitperiode einer Zwischenhaltunteroperation, die jedem Zwischenhaltsignal entspricht, einen vorbestimmten Schwellwert überschreitet;
wobei /eine natürliche Zahl ist.

10. Vorrichtung nach Anspruch 8 oder 9, **dadurch gekennzeichnet, dass** das Zeitbestimmungsmodul (302) ferner Folgendes umfasst:
ein Echtzeitanzeigeuntermodul (3023), das dazu ausgelegt ist, den Wert des Zeitelements, der gemäß dem Unteroperationssignal bestimmt wurde, in Echtzeit anzuzeigen.

11. Vorrichtung nach einem der Ansprüche 7 bis 10, **dadurch gekennzeichnet, dass** die Vorrichtung ferner Folgendes umfasst:
ein Nachrichtenspeichermodul (307), das dazu ausgelegt ist, die Nachricht zu einer Sendeverzögerungswarteschlange hinzuzufügen, wobei die Sendeverzögerungswarteschlange dazu ausgelegt ist, eine zu sendende Nachricht zu speichern;
ein Signalempfangsmodul (308), das dazu ausgelegt ist, ein Bearbeitungssignal mit Bezug auf die vom Nachrichtenspeichermodul (307) in der Nachrichtenverzögerungswarteschlange gespeicherte Nachricht zu empfangen; und
ein Nachrichtenbearbeitungsmodul (309), das dazu ausgelegt ist, die Nachricht gemäß dem vom Signalempfangsmodul (308) empfangenen Bearbeitungssignal zu bearbeiten.

12. Computerprogrammprodukt, das Anweisungen beinhaltet, die, wenn sie von einem Prozessor ausgeführt werden, den Prozessor veranlassen, das Verfahren nach einem der Ansprüche 1 bis 6 durchzuführen.

13. Aufzeichnungsmedium, das von einem Computer lesbar ist und auf dem das

## Revendications

1. Procédé pour envoyer un message, le procédé étant appliqué dans un terminal contenant un écran tactile, et le procédé étant **caractérisé en ce qu'**il comprend les étapes :
d'acquisition (101, 201) d'un signal d'opération déclenché par une opération unique réalisée par un utilisateur sur l'écran tactile, l'opération unique étant une opération réalisée pendant une période entre le moment où un dispositif de pointage entre en contact avec l'écran tactile et le moment où le dispositif de pointage quitte l'écran, l'opération unique comprenant au moins un type de sous-opération ; et
de détermination (102, 202) d'un temps d'envoi du message selon le signal d'opération,
dans lequel la sous-opération est une opération de glissement ou une opération d'arrêt, et l'étape d'acquisition (101, 201) comprend :
l'enregistrement d'un signal de sous-opération correspondant à chacune de la au moins une sous-opération de l'opération unique ; et
de combinaison du au moins un signal de sous-opération selon une séquence de réalisation de la au moins une sous-opération pour former le signal d'opération correspondant à l'opération unique ;
dans lequel le procédé comprend en outre :
après la fin de l'opération unique, l'affichage d'un message d'interrogation pour détecter (203) si un signal de confirmation est reçu, ledit signal de confirmation étant destiné à confirmer que le temps d'envoi déterminé selon le signal d'opération est précis,
lorsqu'un signal déclenché par un utilisateur qui tape une option OUI pour le message d'interrogation est reçu, la détermination de la réception du signal de confirmation ;
lorsqu'un signal déclenché par un utilisateur qui tape une option NON pour le message d'interrogation est reçu, la détermination de la non réception du signal de confirmation ;
s'il est détecté que le signal de confirmation est reçu, l'obtention et l'envoi du message lorsque la surveillance montre qu'un temps système du terminal atteint le temps d'envoi ; et
s'il est détecté que le signal de confirmation n'est pas reçu et qu'un nouveau signal d'opération est acquis, la détermination du temps d'envoi selon le nouveau signal d'opération.

2. Procédé selon la revendication 1, **caractérisé en ce que** l'étape de détermination (102) d'un temps d'envoi d'un message selon le signal d'opération, comprend les étapes :
si le temps d'envoi comprend au moins un élément temporel, pour chaque élément temporel, d'acquisition d'un signal de sous-opération correspondant à l'élément temporel dans le signal d'opération, et
de détermination d'une valeur correspondante de l'élément temporel selon le signal de sous-opération ; le signal de sous-opération étant un signal déclenché par une sous-opération comprise dans l'opération unique, et l'élément temporel étant au moins un élément parmi année, mois, jour, heure, minute et seconde ; et
de combinaison de valeurs de tous les éléments temporels pour former le temps d'envoi.

3. Procédé selon la revendication 2, **caractérisé en ce que** l'étape de détermination d'une valeur correspondante de l'élément temporel selon le signal de sous-opération, comprend les étapes :
si le signal de sous-opération est un signal de glissement, de détermination de la valeur de l'élément temporel selon une distance de glissement d'une sous-opération de glissement correspondant au signal de glissement, la distance de glissement étant en corrélation positive avec la valeur de l'élément temporel ; et
si le signal de sous-opération est un signal d'arrêt, de détermination de la valeur de l'élément temporel selon une période de temps d'arrêt d'une sous-opération d'arrêt correspondant au signal d'arrêt, la période de temps d'arrêt étant en corrélation positive avec la valeur de l'élément temporel.

4. Procédé selon la revendication 2 ou 3, **caractérisé en ce que** le procédé comprend en outre une étape :
d'affichage en temps réel de la valeur de l'élément temporel déterminé selon le signal de sous-opération.

5. Procédé selon la revendication 2, **caractérisé en ce que** l'étape d'acquisition d'un signal de sous-opération correspondant à l'élément temporel dans le signal d'opération, comprend les étapes :
si le signal d'opération comprend au moins un signal de glissement et au moins un signal d'arrêt et que chaque signal d'arrêt est adjacent dans le temps à deux signaux de glissement, de détermination d'un i^{ème} signal de sous-opération dans le signal d'opération comme signal de sous-opération correspondant à un i^{ème} élément temporel, le signal de sous-opération étant un signal de glissement ou un signal d'arrêt ;
si le signal d'opération comprend au moins deux signaux de glissement et que ces signaux de glissement adjacents dans le temps correspondent à des sous-opérations de glissement ayant des directions de glissement différentes, de détermination d'un i^{ème} signal de glissement dans le signal d'opération comme signal de sous-opération correspondant à un i^{ème} élément temporel ; et
si le signal d'opération comprend au moins deux signaux de glissement et au moins un signal d'arrêt et que chaque signal d'arrêt est adjacent dans le temps à deux signaux de glissement lorsqu'une période de temps d'arrêt d'une sous-opération d'arrêt correspondant à chaque signal d'arrêt dépasse un seuil prédéterminé, de détermination d'un i^{ème} signal de glissement dans le signal d'opération comme signal de sous-opération correspondant à un i^{ème} élément temporel ;
dans lequel i est un nombre naturel.

6. Procédé selon l'une quelconque des revendications 1 à 5, **caractérisé en ce que** le procédé comprend en outre les étapes :
d'ajout du message dans une file d'attente d'envoi différé, la file d'attente d'envoi différé étant configurée pour stocker un message à envoyer ;
de réception d'un signal d'édition concernant le message stocké dans la file d'attente d'envoi différé ; et
d'édition du message selon le signal d'édition.

7. Dispositif pour envoyer un message, comprenant :
un module de détermination de temps (302) ; un module d'envoi de messages (303) configuré pour envoyer le message lorsque la surveillance montre qu'un temps système d'un terminal atteint un temps d'envoi déterminé par le module de détermination de temps (302) ;
le dispositif étant **caractérisé en ce que** :
le dispositif est un terminal contenant un écran tactile ;
le dispositif comprend un module d'acquisition de signaux (301) configuré pour acquérir un signal d'opération déclenché par une opération unique réalisée par un utilisateur sur l'écran tactile, l'opération unique étant une opération réalisée pendant une période entre le moment où un dispositif de pointage entre en contact avec l'écran tactile et le moment où le dispositif de pointage quitte l'écran, l'opération unique comprenant au moins un type de sous-opération,
dans lequel la sous-opération est une opération de glissement ou une opération d'arrêt et lors de l'acquisition du signal d'opération déclenché par l'opération unique, le module d'acquisition de signaux (301) est en outre configuré pour :
enregistrer un signal de sous-opération correspondant à chacune de la au moins une sous-opération de l'opération unique ; et
combiner le au moins un signal de sous-opération selon une séquence de réalisation de la au moins une sous-opération pour former le signal d'opération correspondant à l'opération unique ;
dans lequel le module de détermination de temps (302) est configuré pour déterminer le temps d'envoi du message selon le signal d'opération acquis par le module d'acquisition de signaux (301) ;
dans lequel le dispositif comporte en outre :
un module de détection de signaux (304) configuré pour, après la fin de l'opération unique, afficher un message d'interrogation pour détecter (203) si un signal de confirmation est reçu, ledit signal de confirmation étant destiné à confirmer que le temps d'envoi déterminé selon le signal d'opération est précis, et lorsqu'un signal déclenché par un utilisateur qui tape une option OUI pour le message d'interrogation est reçu, déterminer que le signal de confirmation est reçu, et lorsqu'un signal déclenché par un utilisateur qui tape une option NON pour le message d'interrogation est reçu, déterminer que le signal de confirmation n'est pas reçu ;
un module de génération de messages (305) configuré pour, si le module de détection de signaux (304) détecte que le signal de confirmation est reçu, obtenir et envoyer le message ; et
un module de commande d'opération (306) configuré pour, si le module de détection de signaux (304) détecte que le signal de confirmation n'est pas reçu et qu'un nouveau signal d'opération est acquis, déterminer le temps d'envoi selon le nouveau signal d'opération.

8. Dispositif selon la revendication 7, **caractérisé en ce que** le module de détermination de temps (302) comprend :
un sous-module de détermination de valeurs (3021) configuré pour, si le temps d'envoi comprend au moins un élément temporel, pour chaque élément temporel, acquérir un signal de sous-opération correspondant à l'élément temporel dans le signal d'opération, et déterminer une valeur correspondante de l'élément temporel selon le signal de sous-opération ; le signal de sous-opération étant un signal déclenché par une sous-opération comprise dans l'opération unique, et l'élément temporel étant au moins un élément parmi année, mois, jour, heure, minute et seconde ; et
un sous-module de détermination de temps (3022) configuré pour combiner des valeurs de tous les éléments temporels déterminés par le sous-module de détermination de valeur pour former le temps d'envoi.

9. Dispositif selon la revendication 8, **caractérisé en ce que** le sous-module de détermination de valeurs (3021) comprend :
un premier sous-module de détermination (30211) configuré pour, si le signal de sous-opération est un signal de glissement, déterminer la valeur de l'élément temporel selon une distance de glissement d'une sous-opération de glissement correspondant au signal de glissement, la distance de glissement étant en corrélation positive avec la valeur de l'élément temporel ;
un deuxième sous-module de détermination (30212) configuré pour, si le signal de sous-opération est un signal d'arrêt, déterminer la valeur de l'élément temporel selon une période de temps d'arrêt d'une sous-opération d'arrêt correspondant au signal d'arrêt, la période de temps d'arrêt étant en corrélation positive avec la valeur de l'élément temporel ;
un troisième sous-module de détermination (30213) configuré pour, si le signal d'opération comprend au moins un signal de glissement et au moins un signal d'arrêt et que chaque signal d'arrêt est adjacent dans le temps à deux signaux de glissement, déterminer un i^{ème} signal de sous-opération dans le signal d'opération comme signal de sous-opération correspondant à un i^{ème} élément temporel, le signal de sous-opération étant un signal de glissement ou un signal d'arrêt ;
un quatrième sous-module de détermination (30214) configuré pour, si le signal d'opération comprend au moins deux signaux de glissement et que ces signaux de glissement adjacents dans le temps correspondent à des sous-opérations de glissement ayant des directions de glissement différentes, déterminer un i^{ème} signal de glissement dans le signal d'opération comme signal de sous-opération correspondant à un i^{ème} élément temporel ; ou
un cinquième sous-module de détermination (30215) configuré pour, si le signal d'opération comprend au moins deux signaux de glissement et au moins un signal d'arrêt et que chaque signal d'arrêt est adjacent dans le temps à deux signaux de glissement lorsqu'une période de temps d'arrêt d'une sous-opération d'arrêt correspondant à chaque signal d'arrêt dépasse un seuil prédéterminé, déterminer un i^{ème} signal de glissement dans le signal d'opération comme signal de sous-opération correspondant à un i^{ème} élément temporel ;
dans lequel i est un nombre naturel.

10. Dispositif selon la revendication 8 ou 9, **caractérisé en ce que** le module de détermination de temps (302) comprend en outre :
un sous-module d'affichage en temps réel (3023) configuré pour afficher en temps réel la valeur de l'élément temporel déterminé selon le signal de sous-opération.

11. Dispositif selon l'une quelconque des revendications 7 à 10, **caractérisé en ce que** le dispositif comprend en outre :
un module de stockage de messages (307) configuré pour ajouter le message dans une file d'attente d'envoi différé, la file d'attente d'envoi différé étant configurée pour stocker un message à envoyer ;
un module de réception de signaux (308) configuré pour recevoir un signal d'édition concernant le message stocké dans la file d'attente de message différé par le module de stockage de messages (307) ; et
un module d'édition de messages (309) configuré pour éditer le message selon le signal d'édition reçu par le module de réception de signaux (308).

12. Produit de programme informatique comportant des instructions qui, lorsqu'elles sont exécutées par un processeur, amènent ledit processeur à réaliser le procédé selon l'une quelconque des revendications 1 à 6.

13. Support d'enregistrement lisible par un ordinateur et sur lequel est enregistré le produit de programme informatique tel que défini dans la revendication 12.
